# EUROPÄISCHE PATENTSCHRIFT

(11) **EP 1 386 755 B1**
(45) Veröffentlichungstag und Bekanntmachung des Hinweises auf die Patenterteilung: **23.01.2008**
(21) Anmeldenummer: 03009689.5
(22) Anmeldetag: 30.04.2003
(51) Int. Cl.: B60B 3/06, B60B 3/10

(54) **Rad für ein Kraftfahrzeug**
Wheel for motor vehicle
Roue pour véhicule à moteur

(30) Priorität: 01.08.2002 DE 10235146
(43) Veröffentlichungstag der Anmeldung: 04.02.2004
(73) Patentinhaber: Dr.Ing. h.c. F. Porsche Aktiengesellschaft, 70435 Stuttgart (DE)
(72) Erfinder: Berkefeld, Volker, 71272 Renningen (DE); Hummel, Frank, 72800 Eningen (DE)

(56) Entgegenhaltungen:
- EP-A1- 0 546 307
- EP-A2- 1 138 526
- US-A- 6 042 194

## Beschreibung

Die Erfindung bezieht sich auf ein Rad für ein Kraftfahrzeug nach dem Oberbegriff des Anspruchs 1.

Aus der gattungsbildenden EP 0 546 307 B1 ist ein Leichtmetallrad für ein Kraftfahrzeug mit einem mehreren Speichen umfassenden Radstern bekannt, wobei die Speichen im Querschnitt jeweils eine Profilierung aufweisen, die aus einer vorstehenden Rippe mit seitlichen Vertiefungen besteht und die Rippe in einem Befestigungsauge endet, das ans Radzentrum angrenzt.

Die Aufgabe der Erfindung besteht darin, ein Fahrzeugrad zu schaffen, das im Bereich eines Anbindungsknotens an das Radzentrum eine möglichst geringe Dicke zum Radinneren hin aufweist und trotzdem eine geforderte optimale Belastung aufnehmen kann.

Diese Aufgabe wird erfindungsgemäß bei einem Fahrzeugrad durch die Merkmale des Patentanspruchs 1 gelöst. Weitere vorteilhafte Merkmale beinhalten die Unteransprüche.

Die mit der Erfindung hauptsächlich erzielten Vorteile bestehen darin, daß durch eine Aufteilung der Belastungskonzentration auf zwei sogenannte Festigkeitspfade der Rippen die Dicke der Anbindungsknoten an das Radzentrum so weit verminderbar sind, daß eine Bremsanlage problemlos in das Rad einsetzbar ist. Dies wird erzielt, indem die Radspeichen an der Radinnenseite jeweils vom Radzentrum bis zum Radaußenrand benachbart zueinander angeordnet und als vorstehende Rippen ausgebildete Festigkeitspfade aufweisen, die an ihren Längsseiten jeweils von radial verlaufenden Vertiefungen begrenzt sind und über ein flächenmäßig vergrößerten Anbindungsknoten mit dem Radzentrum verbunden sind.

Damit eine Kraftaufteilung in den Speichen des Rades im Lastfall erfolgen kann, sind die Rippen V-förmig verlaufend von dem Radaußenrand bis zum Radzentrum ausgeführt und divergierend zum Radzentrum hin in den Anbindungsknoten auslaufend ausgeführt, so daß quasi eine Dickenverminderung des Anbindungsknotens der Rippen am Radzentrum erzielt wird. Die Rippen können auch parallel oder divergierend zum Radaußenrand verlaufen, wobei diese Rippen ebenfalls V-förmig ausgeführt sind.

Insbesondere sind die Anbindungsknoten zum Radzentrum hin etwa trapezförmig mit einer großen Breite und einer kleineren Breite ausgeführt. Durch diese großflächige Anbindung wird eine Belastungskonzentration auf einen Punkt mit einer großen Dicke, wie nach dem Stand der Technik mit nur einer Rippe vermieden.

Zwischen den beiden Rippen ist eine taschenförmige Vertiefung vorgesehen, die sich zum Radzentrum hin von einer größeren Breite am Radaußenring bis zu einer kleineren Breite am Radzentrum verkleinert. Die taschenförmige Vertiefung weist in einer Ebene X-X einen bogenförmig verlaufenden Grund auf, der sich vom Radaußenrand bis zum Radzentrum hin erstreckt. Diese taschenförmige Vertiefung weist zwischen den beiden Rippen im Bereich des Radaußenrandes eine geringere Breite auf, als in einem mittleren Bereich der Rippen und unmittelbar im Anbindungsknoten der Rippen am Radzentrum verringert sich die Breite der Vertiefung gegen 0. Durch diese Vertiefung wird zwischen den beiden Rippen wird eine Gewichtserleichterung geschaffen, die so ausgelegt ist, daß die Belastung am Rad über die Speichen optimal aufnehmbar ist.

Ferner sind die Vertiefungen in den beiden seitlichen Außenflächen der Rippen nutförmig ausgeführt und im Bereich des Radaußenrandes ist jeweils ein begrenzender Bord vorgesehen, der sich bis zum Radzentrum hin vermindert. Diese nutförmigen Vertiefungen im Zusammenhang mit der taschenförmigen Vertiefung sind in der Weise ausgelegt, daß in den Zonen geringer Belastung relativ breite und tiefe Vertiefungen und im Bereich hoher Belastungen auf das Rad beispielsweise am Radzentrum diese Vertiefungen kleiner sind, das heißt, gegen 0 verlaufen.

Ein Ausführungsbeispiel der Erfindung ist in den Zeichnungen dargestellt und wird im folgenden näher beschrieben. Es zeigen
- Fig. 1: eine Ansicht auf eine Speiche eines Rades von innen mit zwei Rippen,

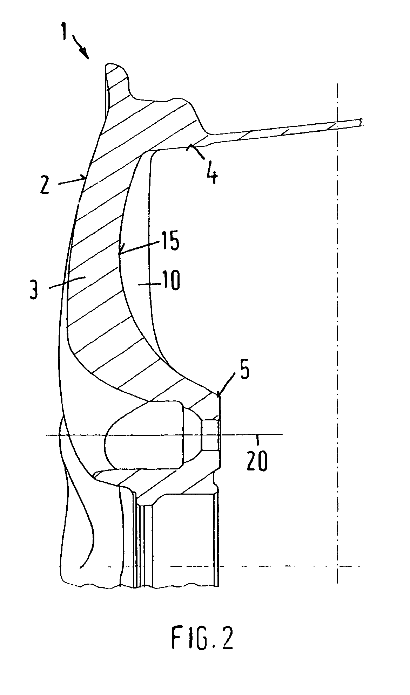

- Fig. 2: einen Längsschnitt durch das Rad gem. der Linie II-II der Fig. 1,
- Fig. 3: einen Schnitt durch die Speiche gem. der Linie III-III der Fig. 1,
- Fig. 4: einen Schnitt durch die Speiche gem. der Linie IV-IV der Fig. 1,
- Fig. 5: einen Schnitt durch die Speiche gem. der Linie V-V der Fig. 1 und
- Fig. 6: einen Schnitt durch die Speiche gem. der Linie VI-VI der Fig. 1.

Das Fahrzeugrad 1 umfaßt im Radstern 2 mehrere Speichen, die sich vom Radaußenrand 4 bis zum Radzentrum 5 hin erstrecken und zwischen sich Luftöffnungen 6 aufweisen.

Die Speichen 3 sind innennseitig im Querschnitt mit einer Profilierung versehen, die aus zwei vorragenden Rippen 7, 8 bestehen und außenseitig angeordnete Vertiefungen 9 und 11 und eine zwischenliegende Vertiefung 10 aufweisen.

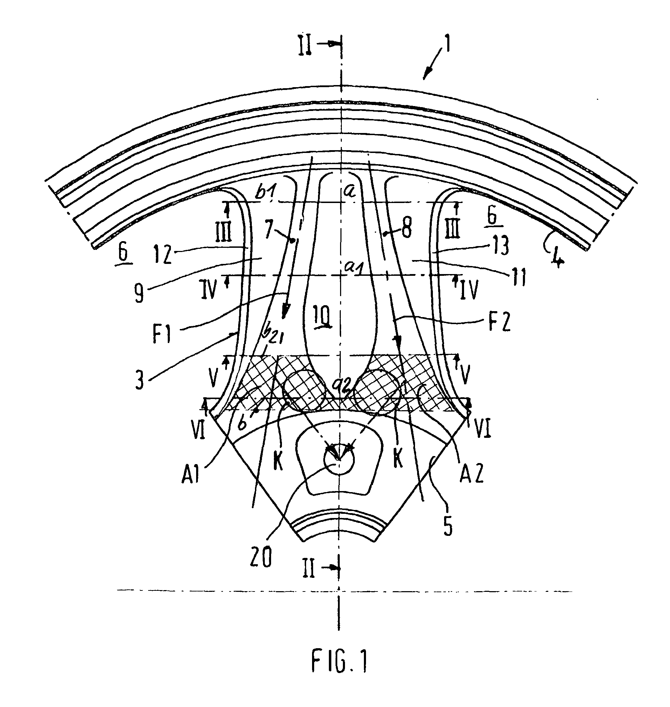

Die Rippen 7, 8 erstrecken sich vom Radaußenrand 4 bis zum Radzentrum 5 und bilden gem. Fig. 1 eine V-Form, die sich zum Radzentrum 5 hin öffnet, das heißt der Abstand zwischen den Rippen 7, 8 ist am Radzentrum 5 größer als am Radaußenrand 4. Die Rippen 7, 8 bilden sogenannte Festigkeitspfade F1 und F2, die der Radbefestigung 10 am Fahrzeug zulaufen und die höchsten Belastungen im Anbindungsknoten A1 und A2 (schraffiert dargestellt), der Rippen 7, 8 am Radzentrum 5 auftreten.

Nach weiteren Ausführungen können die Rippen 7,8 auch parallel oder V-förmig divergierend zum Radaußenrand 4 hin verlaufend ausgeführt sein.

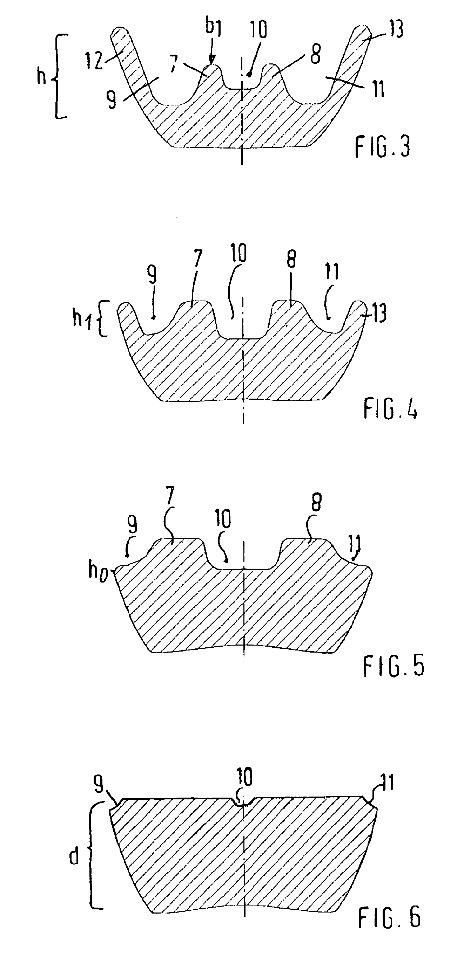

Damit eine Belastungskonzentration in den Knoten A1 und A2 aufzunehmen ist, weisen die Rippen 7, 8 in diesen Knoten die größte Dicke auf und die Vertiefungen 9, 10 und 11 sind vernachlässigbar klein, wie insbesondere Fig. 6 zeigt.

Wie die Fig. 3 bis Fig. 5 näher zeigen, weisen gem. Fig. 3 die Rippen 7, 8 am Radaußenrand 4 eine geringere Breite b1 als am Radzentrum 5 mit der Breite b1 auf und die zwischenliegenden Vertiefung 10 erstreckt sich wie auch die weiteren außenliegenden Vertiefungen 9 und 10 seitlich neben den Rippen 7 und 8 radial vom Radaußenrand 4 bis zum Radzentrum 5.

Die seitlich außenliegenden Vertiefungen 9 und 11 weisen jeweils einen begrenzenden Bord 12, 13 auf, der etwa nur bis mittig der Speichen 7, 8 angeordnet ist. Die zwischen den Rippen 7, 8 liegende Vertiefung ist taschenförmig ausgeführt und weist in Höhe des Schnittes lll-lll eine geringere Breite a auf, als in Höhe des Schnittes V-V und verengt sich zum Ende hin auf die Breite a2.

Durch diese Verengung der taschenförmigen Vertiefung 10 und des Auslaufs der seitlichen Vertiefungen 9, 11 werden großflächige Anbindungsknoten A1 und A2 der Rippen 7, 8 am Radzentrum 5, etwa in Trapezform, geschaffen, welche zwischen sich die Radbefestigung 20 aufnehmen und somit der Kraftfluß in den Festigkeitspfaden F1 und F2 vor dem Radzentrum 5 aufgeteilt ist und danach sich in der Radbefestigung 20 verreinigen kann.

In Fig. 1 sind die Anbindungsknoten A1 und A2 mit hohen Belastungen durch eine Kreuzschraffur veranschaulicht dargestellt, wobei der Kern der Höchstbelastung im Anbindungsknoten A1 und A2 etwa im Bereich des dargestellten Kreises K liegt.

## Patentansprüche

1. Rad für ein Kraftfahrzeug mit mehreren radial verlaufenden Speichen (3) und einem Radstern, die zwischen sich Luftöffnungen (6) aufweisen und an ihrer Innenseite jeweils mit einer im Querschnitt ausgebildeten Profilierung versehen sind, **dadurch gekennzeichnet, daß** die Radspeichen (3) an der Innenseite jeweils vom Radzentrum (5) bis zum Radaußenrand (4) benachbart zueinander angeordnete und als vorstehende Rippen (7, 8) ausgebildete Festigkeitspfade (F1 und F2) aufweisen, die der Radbefestigung (20) zulaufen und daß die Rippen (7, 8) an Ihren Längsseiten jeweils von radial verlaufenden Vertiefungen (9, 10, 11) begrenzt sind und über flächenmäßig vergrößerte Anbindungsknoten (A1, A2) mit dem Radzentrum (5) verbunden sind.

2. Rad nach Anspruch 1, **dadurch gekennzeichnet, daß** die Rippen (7, 8) V-förmig verlaufend vom Radaußenrand (4) bis zum Radzentrum (5) ausgeführt und divergierend zum Radzentrum (5) hin in die Anbindungsknoten (A1, A2) auslaufend ausgeführt sind.

3. Rad nach den Ansprüchen 1 oder 2, **dadurch gekennzeichnet, daß** die Anbindungsknoten (A1, A2) zum Radzentrum (5) hin etwa trapezförmig mit einer großen Breite (b) und einer kleineren Breite (b2) ausgeführt sind.

4. Rad nach den Ansprüchen 1 oder 3, **dadurch gekennzeichnet, daß** die beiden Rippen (7, 8) parallel verlaufend ausgeführt sind.

5. Rad nach den Ansprüchen 1 oder 3, **dadurch gekennzeichnet, daß** die beiden Rippen (7, 8) V-förmig verlaufend vom Radzentrum (5) bis zum Radaußenrand (4) ausgeführt und divergierend zum Radaußenrand (4) auslaufen.

6. Rad nach den Ansprüchen 1, 2 oder 3, **dadurch gekennzeichnet, daß** zwischen den beiden Rippen (7, 8) eine taschenförmige Vertiefung (10) vorgesehen ist, die sich von der Breite (a) am Radaußenrand (4) bis zur Breite (a2) am Radzentrum (5) verkleinert.

7. Rad nach Anspruch 4, **dadurch gekennzeichnet, daß** die taschenförmige Vertiefung (10) in einer Ebene (X-X) einen bogenförmig verlaufenden Grund (15) aufweist, der sich vom Radaußenrand (4) bis zum Radzentrum (5) hin erstreckt.

8. Rad nach einem oder mehreren der vorhergehenden Ansprüche, **dadurch gekennzeichnet, daß** die taschenförmige Vertiefung (10) zwischen den beiden Rippen (7, 8) im Bereich des Radaußenrandes (4) eine geringere Breite (a) aufweist als in einem mittleren Bereich der Rippe (7, 8) mit der Breite (a1) und unmittelbar im Anbindungsknoten (A1, A2) der Rippen (7, 8) am Radzentrum (5) die Breite der Vertiefung (10) sich auf die Breite (a2) verringert.

9. Rad nach einem oder mehreren der vorhergehenden Ansprüche, **dadurch gekennzeichnet, daß** die Vertiefungen (9, 11) in den beiden seitlichen Außenflächen der Speiche (3) nutförmig ausgeführt sind und im Bereich des Radaußenrandes (4) jeweils einen außenseitig begrenzenden Bord (12, 13) mit der Höhe (h, h1) aufweisen, der sich bis zum Radzentrum (5) auf die Höhe (h0) vermindert.

## Claims

1. Wheel for a motor vehicle, with a plurality of spokes (3) running radially and a wheel spider, the spokes having air openings (6) between them and are each provided on their inside with a profiling formed in the cross section, **characterized in that** the wheel spokes (3) have, on the inside, in each case from the wheel centre (5) as far as the wheel outer edge (4), resistance paths (F1 and F2) which are arranged adjacent to each other and are designed as projecting ribs (7, 8) and which run up to the wheel fastening (20), and **in that** the ribs (7, 8) are each bounded on their longitudinal sides by depressions (9, 10, 11) running radially and are connected to the wheel centre (5) via enlarged-area connecting nodes (A1, A2).

2. Wheel according to Claim 1, **characterized in that** the ribs (7, 8) are designed such that they run in a V-shaped manner from the wheel outer edge (4) as far as the wheel centre (5) and are designed such that they diverge towards the wheel centre (5) and end in the connecting nodes (A1, A2).

3. Wheel according to Claims 1 or 2, **characterized in that** the connecting nodes (A1, A2) are of approximately trapezoidal design towards the wheel centre (5) with a large width (b) and a smaller width (b2).

4. Wheel according to Claims 1 or 3, **characterized in that** the two ribs (7, 8) are designed such that they run parallel.

5. Wheel according to Claims 1 or 3, **characterized in that** the two ribs (7, 8) are designed such that they run in a V-shaped manner from the wheel centre (5) as far as the wheel outer edge (4) and end diverging towards the wheel outer edge (4).

6. Wheel according to Claims 1, 2 or 3, **characterized in that** a pocket-shaped depression (10) is provided between the two ribs (7, 8) and is reduced in size from the width (a) at the wheel outer edge (4) to the width (a2) at the wheel centre (5).

7. Wheel according to Claim 4, **characterized in that** the pocket-shaped depression (10) has, in a plane (X-X), a base (15) which has a curved profile and extends from the wheel outer edge (4) towards the wheel centre (5) .

8. Wheel according to one or more of the preceding claims, **characterized in that** the pocket-shaped depression (10) between the two ribs (7, 8) has a smaller width (a) in the region of the wheel outer edge (4) than in a central region of the rib (7, 8) with the width (a1) and the width of the depression (10) is reduced to the width (a2) directly in the connecting nodes (A1, A2) connecting the ribs (7, 8) to the wheel centre (5).

9. Wheel according to one or more of the preceding claims, **characterized in that** the depressions (9, 11) in the two lateral outer surfaces of the spoke (3) are of groove-shaped design and each have, in the region of the wheel outer edge (4), a rim (12, 13) which delimits them on the outside and has the height (h, h1) which is reduced towards the wheel centre (5) to the height (h0) .

## Revendications

1. Roue pour un véhicule automobile avec plusieurs rayons (3) s'étendant radialement et avec un corps de roue, qui présentent entre eux des ouvertures d'aération (6) et qui sont pourvus sur leur face interne chaque fois d'un profilage réalisé transversalement, **caractérisé en ce que** les rayons (3) de la roue présentent sur le côté interne des voies de stabilité (F1 et F2) partant à chaque fois du centre (5) de la roue vers le bord externe (4) de la roue, disposées l'une à côté de l'autre et réalisées sous forme de nervures (7, 8) proéminentes qui convergent vers la fixation (20) de la roue et **en ce que** les nervures (7, 8) sont délimitées le long de leurs côtés longitudinaux à chaque fois par des creux (9, 10, 11) s'étendant radialement et sont reliées via des noeuds d'assemblage (A1, A2) à surface agrandie au centre (5) de la roue.

2. Roue selon la revendication 1, **caractérisée en ce que** les nervures (7, 8) s'étendent en forme de V du bord externe (4) de la roue vers le centre (5) de la roue et sont réalisés en s'étendant de manière divergente vers le centre (5) de la roue en formant les noeuds d'assemblage (A1, A2).

3. Roue selon les revendications 1 ou 2, **caractérisée en ce que** les noeuds de raccordement (A1, A2) vers le centre (5) de la roue sont réalisés environ en forme de trapèze avec une grande largeur (b) et une largeur plus petite (b2).

4. Roue selon les revendications 1 ou 3, **caractérisée en ce que** les deux nervures (7, 8) sont réalisées en s'étendant parallèlement.

5. Roue selon les revendications 1 ou 3, **caractérisée en ce que** les deux nervures (7, 8) s'étendent en forme de V centre (5) de la roue vers le bord externe (4) de la roue et sont réalisés en s'étendant de manière divergente vers le bord externe (4) de la roue.

6. Roue selon es revendications 1, 2 ou 3, **caractérisée en ce qu'**on a prévu, entre les deux nervures (7, 8) un creux (10) en forme de poche qui diminue à partir de la largeur (a) au niveau du bord externe (4) de la roue jusqu'à la largeur (a2) au niveau du centre (5) de la roue.

7. Roue selon la revendication 4, **caractérisée en ce que** le creux (10) en forme de poche présente, dans un plan (X-X) un fond (15) en forme d'arc, qui s'étend du bord externe (4) de la roue jusqu'au centre (5) de la roue.

8. Roue selon l'une ou plusieurs des revendications précédentes, **caractérisée en ce que** le creux (10) en forme de poche entre les deux nervures (7, 8) présente, dans la zone du bord externe (4) de la roue une largeur plus petite (a) que dans la zone centrale des nervures (7, 8) avec la largeur (a1) et la largeur du creux (10) diminue directement dans les noeuds d'assemblage (A1, A2) des nervures (7, 8) au centre (5) de la roue à la largeur (a2).

9. Roue selon l'une ou plusieurs des revendications précédentes, **caractérisée en ce que** les creux (9, 11) dans les deux surfaces externes latérales des rayons (3) sont réalisés en forme de rainure et on a prévu, au niveau du bord externe (4) de la roue, à chaque fois un bord (12, 13) délimité côté externe présentant la hauteur (h, h1), qui diminue jusqu'au centre (5) de la roue à la hauteur (h0).
